# EUROPEAN PATENT APPLICATION

(11) **EP 3 461 796 A1**
(43) Date of publication of application: **03.04.2019**
(21) Application number: 17382643.9
(22) Date of filing: 28.09.2017
(51) Int. Cl.: C02F 11/12, B01D 35/05, B01D 29/35, C02F 103/20, B30B 9/12, B01D 29/64

(54) **FLOATING DEWATERING DEVICE FOR SLURRY**

(71) Applicant: Agrària Plana de Vic I Secció de Crédit, SCCL, 08500 Vic (ES); Grup Solucions Manresa, SLPU, 08241 Manresa (ES)
(72) Inventor: PLANAS VILARDAGA, Ricard, 08241 Manresa (ES); MARTIN MARTÍ, Silvia, 08500 Vic (ES); OVEJERO GARCÍA, Jonatan, 08500 Vic (ES); PUYUELO SÁNCHEZ, Maria Belén, 08500 Vic (ES); PONSA SALAS, Sergio, 08500 Vic (ES)
(74) Representative: Carvajal y Urquijo, Isabel

(57) **Abstract**

The present invention relates to a system and a device for the treatment of slurries that comprises: a filtering mechanism that has a slurry inlet and a filtered slurry outlet; and a pump associated to the filtered slurry outlet; wherein the device comprises floating means of the filtering mechanism in a first basin and fluid communication means to transfer the filtered slurry outlet to a second basin.

## Description

### Field of the invention

The present invention relates to a system for treating slurry. Specifically, the present invention relates to the separation of slurry in a diluted phase (in other words, a filtered phase) and a concentrated phase, both in liquid phase such that the storage and transportation thereof is facilitated by means of means available in conventional livestock installations and requiring less adjustments than the treatment systems currently in use.

Liquid phase is understood as any fluid comprising less than 20% solid matter, the solid matter preferably not being greater than 15%.

### Background of the invention

Today, the generation of slurry by livestock farms and especially by pig farms are an important environmental problem since, on one hand, the transportation thereof is complicated since large amounts of untreated slurry are required for it to be used as fertilizer and, on the other hand, it has too many contaminants to be disposed of directly.

Livestock excretions and, specifically, pig excretions contain nutritional elements for crops, and especially organic matter that can be used by plants for the growth thereof, such as Nitrogen (N), Phosphorus (P), Potassium (K), Calcium (Ca), Magnesium (Mg) and Sulfur (S), as well as a series of nutritional elements that the plant needs in very small amounts.

At least a portion of said substances are found in organic forms. These forms help them stay in the soil until the plants need them. Likewise, the organic matter provided by these droppings is fundamental for improving the fertility of the soil, since they provide Cation-Exchange Capacity (CEC), water retention capacity, porosity, the amount of organic matter being a basic element for characterizing the fertility of soil.

Thus, fertilizing by using organic fertilizer with animal excretions is a practice known by farmers, who often prefer to provide slurry over synthetic fertilizers.

One of the problems that organic fertilizer has is that excessive fertilizing can cause environmental problems, and especially with those elements that are soluble in water, since rain causes them to dissolve and the subsequent outlet thereof by means of subterranean or surface water sources, arriving at large bodies of water, aquifers, etc. being able, in certain cases, to cause considerable environmental problems.

Excessive fertilizing can take place in order to prevent the high cost of transporting these products, since a significant amount of slurry contains a relatively small amount of Fertilizing Units (a fertilizing unit being understood as 1 kg of nutritional element), causing the user to prefer to pour this product on the land close to the farm, rather than take on high transportation costs to export these elements to deficient land that is farther away from the centers of production.

Moreover, the livestock industry tends to generate a concentration of service generation points for the same sector, such as feed factories, slaughterhouses, cutting plants, etc. Consequently, growth in the livestock sector usually generates areas of high livestock density and, possibly, with insufficient land for managing the droppings thereof and, furthermore, areas with a high agricultural activity are not usually near said livestock industry and, consequently, farther away from said centers of concentration of livestock services.

The concentration of this waste in order to be able to remove it from the agricultural chain or transport it over large distances has been an objective of the livestock sector (which mostly responsible for assuming the cost of managing the droppings) for decades. For this reason, the concentration of nutritional elements per unit of weight is fundamental in order to make it viable.

The elements that generate the most environmental problems are nitrogen, phosphorus and potassium. The average chemical composition of the pig slurry, based on the exploitation can be found in annex 2 of Decree 136/2009, of 1 September published in the Official Gazette of the Generalitat de Catalonia Number. 5457 - 3.9.2009, which relates to the approval of the actuation program applicable in vulnerable areas in relation to nitrogen pollution arising from agricultural sources and management of livestock droppings. In this document, it is disclosed that it is common to find farms with a nitrogen concentration in slurry of up to 2000 ppm. Furthermore, according to annex 2 of Decree 136/2009, a slurry from breeding sows contains 2,900 ppm of nitrogen which means 2.9 kg N/m³, approximately 2.9 kg N/ton.

Furthermore, it is known that a synthetic fertilizer, for example, N32 (50% ureic N, 25% ammoniacal N and 25% nitric N) contains 320 kg N/ton for which reason, if replacing it with organic fertilizers is desired, it is necessary to bring a large amount of slurry in order to satisfy the fertilizer needs of a crop, which makes it difficult for this slurry to be transported over large distances since a large amount of water is transported with a small amount of nutrients.

A significant portion of the macronutrients such as nitrogen, phosphorus and others is bonded to larger-sized particles, being mostly in organic forms. The techniques known until now for concentrating the nutritional elements per unit of weight of the slurry are based on separating by particle size, obtaining two fractions, a solid fraction that contains the larger particles and a liquid fraction that contains the rest.

Currently, for the separation of the slurry into a solid phase and a liquid one, the devices known in the state of the art as separators are used. The function of said separators is to separate the slurry into a liquid portion with low organic matter content (and, consequently, not very suitable to be used as fertilizer) and a solid portion. The solid portion contains most of the organic matter and can be used as fertilizer, however, the handling of said solid portion requires a specific infrastructure such as, for example, manure piles with relevant civil engineering works in order to support the weight, specific machinery for loading and unloading the transportation vehicles, if it is not manual, specific transportation infrastructure for solid matter and specific machinery for spreading the fertilizer in the fields, which could be a spreader trailer.

In conclusion, the handling of solid organic matter is a problem in the livestock industry given the need to have separation means for the solid matter, specific tanks for solid matter, loading and transportation means and very expensive fertilizer-spreading means.

### Description of the invention

With the aim of resolving the problems of the devices and systems of the previous art, the present invention discloses a slurry treatment system of the type which comprises:
- a first slurry basin arranged for receiving slurry; and
- a second basin;
and that, furthermore, it comprises a slurry treatment device that, in turn, comprises:
- a filtering mechanism that has a slurry inlet and a slurry outlet;
- a filter with a face connected to the slurry inlet of the filtering mechanism and another face that defines a filtered slurry outlet;
- a pump associated to the filtered slurry outlet; and
- fluid communication means between the pump associated to the filtered slurry outlet and the second basin.

In an exemplary embodiment, the filtered slurry outlet is connected to a filtered slurry chamber that can be sealed in order to prevent the mixing thereof with the unfiltered slurry. Furthermore, the pump can be arranged inside of said chamber in order to have an intermediary storage of the filtered slurry prior to the transportation thereof by means of the pump and the fluid communication means to the second basin.

Preferably, the slurry treatment device comprises location means for said device at a certain height of the first basin. The location means at a certain height of the first basin could be, for example, flotation means, the floatability of which can be fixed or variable.

In one embodiment, the filtering mechanism is a cylinder, with a slurry inlet, the body of which is a filter through which the filtered slurry outlet is defined. The filtering mechanism can have, for example, a helical element, i.e., a worm shaft, on the inside of the cylinder, the function of which is to longitudinally move the slurry along said cylinder from the slurry inlet area to the slurry outlet area and that, furthermore, fulfils a filter cleaning function. In a preferred embodiment, the distance between the blades of the worm shaft and the wall of the filtering cylinder is smaller than the pore size of the filter of the cylinder. In a preferred embodiment, the pore size of the filter of the cylinder would be comprised between 1.0 and 4.0 mm and in another preferred embodiment said pore size would be comprised between 1.5 and 3.0 mm.

The slurry treatment device comprises movement means of the filtering mechanism in the first basin. For example, by means of a crane or motorized movement means.

Furthermore, the present invention discloses a device for the treatment of slurry of the type that comprises:
- a filtering mechanism that has a slurry inlet and a slurry outlet;
- a filter with a face connected to the slurry inlet and another face that defines a filtered slurry outlet; and
- a pump associated to the filtered slurry outlet;
wherein the device comprises movement means of the filtering mechanism in a first basin and fluid communication means between the filtered slurry outlet and a second basin.

In an exemplary embodiment, the filtered slurry outlet is connected to a filtered slurry chamber and the pump is, preferably, arranged in the filtered slurry chamber, said chamber being able, for example, to be sealed in order to prevent the outlet of the filtered slurry back to the first basin.

Preferably, the filtering mechanism is a cylinder, with a slurry inlet and the body of which is a filter that defines the filtered slurry outlet. In an additional embodiment, the slurry inlet is carried out through the side wall thereof or through one of the bases of the cylinder.

More preferably, the aforementioned cylinder of the filtering mechanism has a helical element on the inside thereof, for example a worm shaft for moving the slurry along the inside of the cylinder from the slurry inlet to the slurry outlet, and that furthermore enables the filter to be cleaned.

In a preferable embodiment, the distance between the blades of the worm shaft and the wall of the filtering cylinder is smaller than the pore size of the filter of the cylinder. In a preferred embodiment, the pore size of the filter of the cylinder would be comprised between 1.0 and 4.0 mm and in another more preferred embodiment said pore size would be comprised between 1.5 and 3.0 mm.

Additionally, the device can have location means at a certain height of the first basin, for example, by means of floats, the floatability of which can be fixed or viable.

### Brief description of the drawings

In the attached figures, two exemplary embodiments of the system are shown, by way of illustration and not limitation, according to the present invention, in which:
- Figure 1 shows an example of a slurry separator according to the prior art.
- Figure 2 shows an exemplary embodiment of a slurry treatment device according to an embodiment of the present invention.
- Figure 3 shows the device of figure 2 in operation in a slurry basin.
- Figure 4 shows a schematic view of a slurry treatment system according to the present invention.
- Figure 5 shows an example of a slurry treatment device according to the present invention.
- Figure 6 shows an example of a filtering mechanism for the use thereof in a device, for example, such as the one of figure 5.

### Detailed description of an embodiment

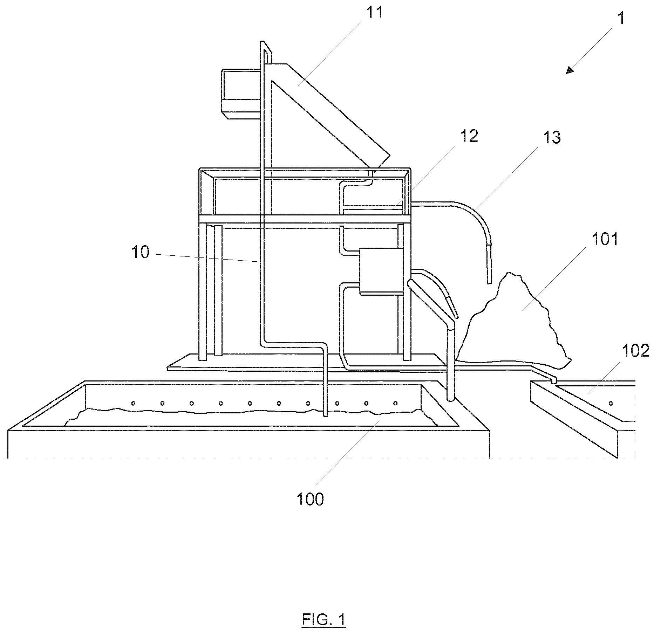

Figure 1 shows an exemplary embodiment of a separator according to the prior art. The aim of the separator of figure 1 is to separate the slurry into a solid (or semisolid) portion that substantially contains all the organic matter and that is stored in a manure pile 101 and a liquid portion that is stored in a second basin 102.

Said separators have a pump with considerable capacity that raises the slurry from the first basin 100 to the separator 11, 12. The separator is usually arranged in a raised site so that the solid portion falls due to gravity, by means of transportation means 13, towards a manure pile 101. Said raising of the slurry is done by means of flexible tubes 10 and a pump suitable for raising them around six meters onto the platform of the manure pile 101. Definitively, this type of mechanism requires specific installations with considerable costs, apart from a relevant energy cost due to requiring pumps with considerable capacity (around 2 kWh).

The separation of the solid portion of the liquid requires additional mechanisms that also represent considerable energetic consumption, specifically, in the separator 11, 12.

An example of a separator 11, 12 is the press separator, with which energy needs to be applied as well as sieves that use gravity. Additionally, this type of separator 12 needs cleaning elements for the sieves.

Definitively, for any type of separator 11, 12 which requires the handling of the solid portion, the power to move said phase is always more expensive than moving liquid phases.

Furthermore, the handling of the nitrogen in the slurry is especially relevant since it is one of the elements that generates more environmental problems. The nitrogen is found in ammoniacal NH4 and nitric NO3 form and is thus dissolved in the liquid phase. The separation of the solid phase means that the majority of the nitrogen is maintained in the liquid phase and only a portion of the organic nitrogen passes to the solid phase.

Consequently, from the point of view of the separation of nitrogen, the separation efficiency is low.

Furthermore, it is known that the concentration of nitrogen in the slurry basins has a vertical gradient, with a higher concentration in the lower portions that reduces towards the surface.

With the aim of resolving the problems of the prior art, the present invention discloses a slurry separation system and device, the result of which is two liquid phases, a concentrated liquid phase and a diluted liquid phase. This type of separation enables the majority of the organic matter to be in a concentrated liquid phase that occupies a reduced volume, making the transportation thereof to agricultural fields that are farther away possible in a much cheaper manner than in the state of the art since it does not require machinery or specific installations for the storage, loading, transportation, unloading and spreading thereof in the fields. Furthermore, this separation into two phases enables that, in nearby agricultural fields, the diluted or filtered (once passed through the purification process) phase can be used, since the transportation can be performed e.g. by means of pumps with relatively low costs.

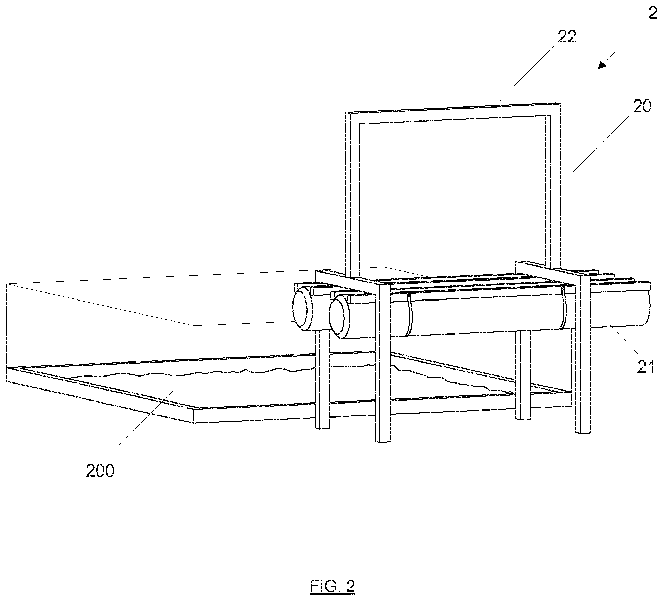

Figure 2 shows a portion of a slurry treatment system 2 according to the present invention. Specifically, the system 2 has a slurry treatment device 20 which comprises a series of floats 21 with the aim of defining the height of the device 20 when it is in operation with respect to a first basin 200.

Additionally, the device 20 of figure 2 has movement means 22 over the first basin 200, in this specific case said movement means 22 comprise a framework and a crane that can move the device 20.

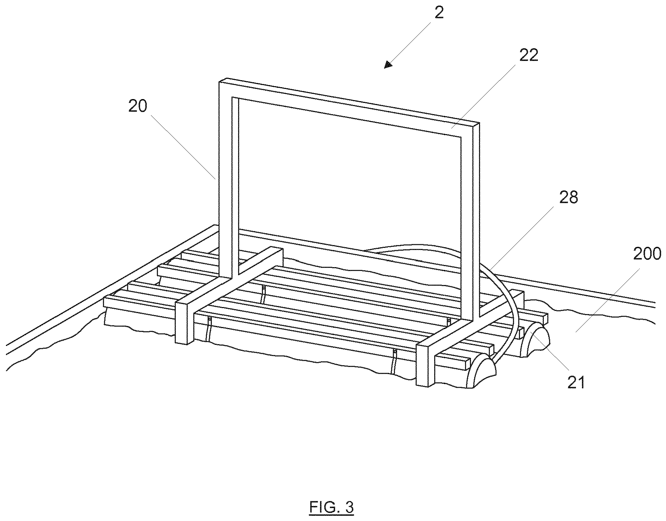

Figure 3 shows the device 20 and the system 2 of figure 2 in operation while it treats a slurry from a first basin 200. Figure 3 shows that the device is submerged at least partially in slurry contained in the basin 200. The aim of the device 20 is to come into contact with the slurry in order to filter it and divide the slurry into two phases, a concentrated phase with a larger amount of organic particles and a diluted portion that is filtered by means of the device 20 and is transported, as a liquid phase to a second basin, for example, by means of a flexible tube 28.

The operation with two liquid phases, one concentrated and one diluted, enable the substantial use of all the elements that are currently arranged in conventional agricultural installations that have always handled liquid waste and have suitable means for the transportation and storage thereof. Furthermore, such a high level of energy consumption is not required as in the case of the separation into a liquid phase and solid phase. In fact, the pumps for the transportation from the first basin to the second basin can be performed by means of 0.5 kWh pumps instead of the 2 kWh pumps of the devices of the prior art such as, for example, of figure 1.

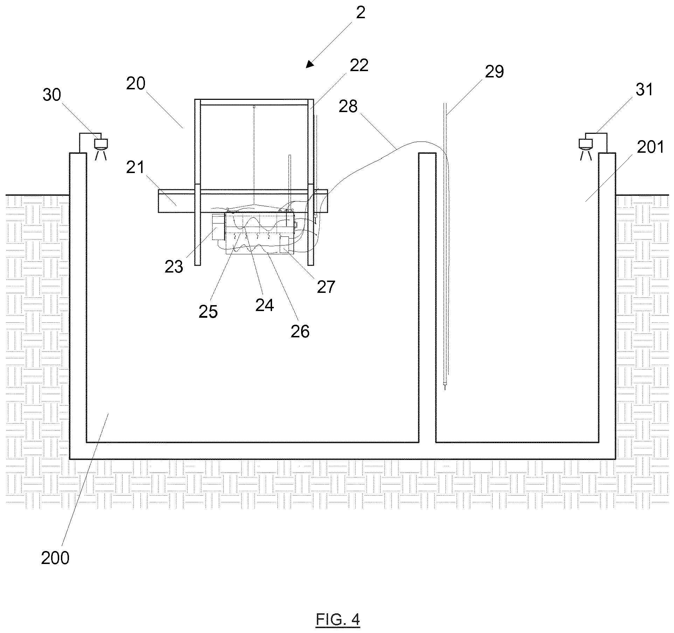

Figure 4 shows in detail and in a schematic manner the components of a system 2 for the treatment of slurry according to a preferred embodiment of the present invention.

Figure 4 shows a system 2 which comprises a first basin 200 intended to receive slurry obtained from livestock droppings and a second basin 201 intended to store the diluted phase of the slurry once it is treated with the slurry treatment device 20.

The slurry treatment device 20 has a float 21 in order to define the arrangement height of the device 20 with respect to the basin. In an especially preferred embodiment, the float has a variable floatability that can be configured by the user. Additionally, the device 20 has a framework 22 for connecting to movement means of the device 20 such as, for example, a crane or guides with a transportation mechanism such as, for example, a motor.

Moreover, the device 20 has a filtering mechanism 23 intended to be arranged submerged and preferably the slurry of the upper portion of the basin 200. The filtering mechanism 23 has an inlet for the slurry contained in the first basin 200 to the inside thereof and comprises a filter 25, the outlet of which is filtered slurry and is moved towards a chamber 26 in which a pump 27 is arranged for the transfer thereof to a second basin 201. Consequently, there is a first basin 200 in which the slurry with a higher concentration of organic components and a filtered slurry, that is, a diluted phase of the slurry which is transferred to the second basin 201, are kept.

With the aim of facilitating the passage of the slurry along the filter 25, the filtering mechanism 23 can comprise movement means of the slurry and cleaning means of the filter such as, for example, a helical element 24 which enables the transfer of the liquid components as well as some solid elements which can be found in the slurry. Said solid elements are preferably kept in the first basin 200 given the high level of organic elements thereof.

The pump 27 receives the filtered slurry through the filter 25 and transfers it through the fluid communication means such as e.g., a flexible tube 28 to the second basin 201.

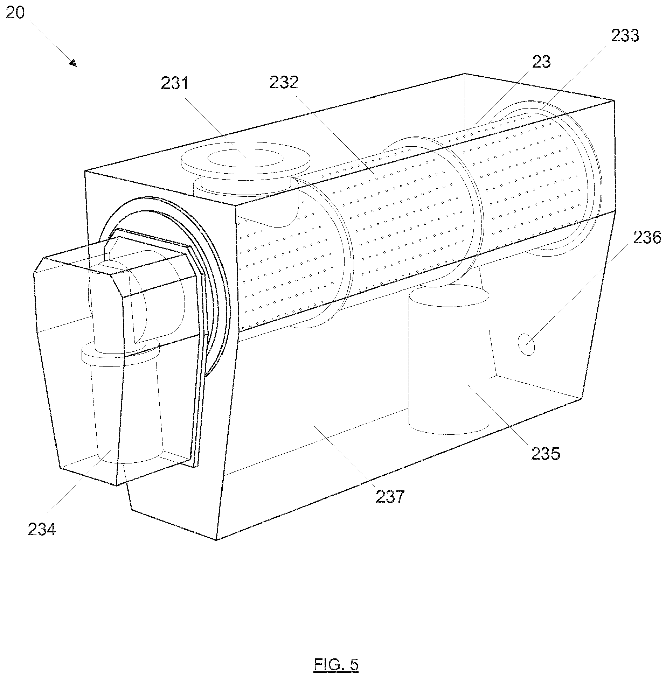

Figure 5 shows an example of a slurry treatment device 20 according to an embodiment of the present invention. In this example, the device 20 has a filtering mechanism 23 which has a cylindrical body that comprises a slurry inlet 231 and an unfiltered slurry outlet 233. Additionally, it has, in the body of the cylinder, a filter 232 through which the slurry passes. A portion of this slurry is filtered and passes through the filter 232 to a chamber 237 as filtered slurry or diluted phase. The slurry that has not been filtered is returned to the first basin 200 and, given that this slurry now has a higher concentration of organic matter, the organic matter of the slurry of the basin 200 increases in concentration per volume. As for the diluted or filtered slurry, it is transferred by means of a pump 235 through an outlet 236 of the chamber to a second basin in which the lower concentration or filtered slurry is stored.

In an especially preferred embodiment, an element is arranged in order to help the passage of the slurry along the filtering mechanism 23 with a helical element, for example a worm shaft. Consequently, the filtering mechanism comprises energy generation means 234 in order to energize said elements.

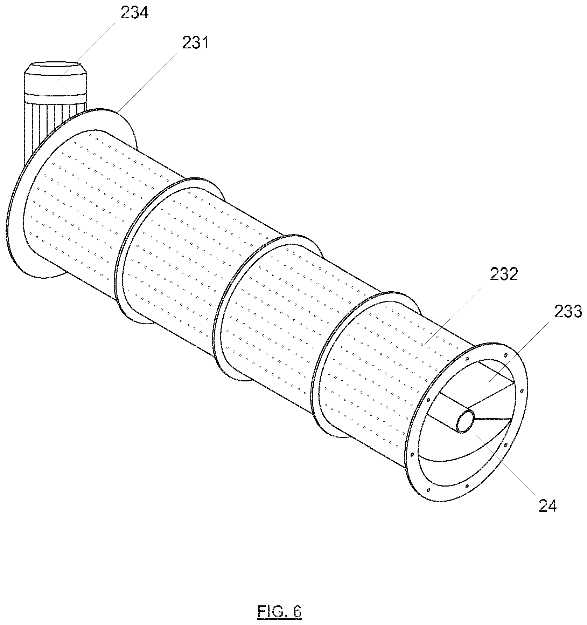

Figure 6 shows an exemplary embodiment of a portion of a filtering mechanism according to the present invention. In the case of figure 6, the filtering mechanism 23 comprises a substantially cylindrical filter 232 and in an especially preferred embodiment contains a helical element 24 on the inside of the filter 232 for moving the slurry along it and for cleaning said filter. Furthermore, the filter can have the slurry inlet 231 in a first end of the base thereof, and in the opposite end an unfiltered slurry outlet 233 and the filter 232 in the body thereof. Additionally, the helical element is powered by means of a motor, e.g., an electric one by way of energy generation means 234.

## Claims

1. A slurry treatment system of the type that comprises:
• a first slurry basin arranged for receiving slurry; and
• a second basin;
**characterized in that** it comprises a slurry treatment device that, in turn, comprises:
• a filtering mechanism that has a slurry inlet and a slurry outlet;
• a filter with a face connected to the slurry inlet of the filtering mechanism and another face that defines a filtered slurry outlet;
• a pump associated to the filtered slurry outlet; and
• fluid communication means between the pump and the second basin.

2. The system, according to claim 1, **characterized in that** the filtered slurry outlet is connected to a filtered slurry chamber.

3. The system, according to claim 2, **characterized in that** the pump is arranged in the filtered slurry chamber.

4. The system, according to any of the preceding claims, **characterized in that** the slurry treatment device comprises location means at a certain height of the first basin.

5. The system, according to claim 4, **characterized in that** the location means at a certain height of the first basin comprise floatation means.

6. The system, according to any of the preceding claims **characterized in that** the filtering mechanism is a cylinder, with a slurry inlet and the body of which is a filter through which the filtered slurry outlet is defined.

7. The system, according to claim 6, **characterized in that** the filtering mechanism has a helical element on the inside of the cylinder for moving the slurry and cleaning the filter.

8. The system, according to any of the preceding claims, **characterized in that** the slurry treatment device comprises movement means of the filtering mechanism in the first basin.

9. A device for the treatment of slurry of the type that comprises:
• a filtering mechanism that has a slurry inlet and a slurry outlet;
• a filter with a face connected to the slurry inlet and another face that defines a filtered slurry outlet; and
• a pump associated to the filtered slurry outlet;
wherein the device comprises movement means of the filtering mechanism in a first basin and fluid communication means between the filtered slurry outlet and a second basin.

10. The device, according to claim 9, **characterized in that** the filtered slurry outlet is connected to a filtered slurry chamber.

11. The device, according to claim 10, **characterized in that** the pump is arranged in the filtered slurry chamber.

12. The device, according to any of claims 9 to 11, **characterized in that** the filtering mechanism is a cylinder, the base or side wall of which defines the slurry inlet and the body of which is a filter that defines the filtered slurry outlet.

13. The device, according to claim 12, **characterized in that** the filtering mechanism has a helical element on the inside of the cylinder for moving the slurry along the cylinder between the slurry inlet and the slurry outlet and for cleaning the filter.

14. The device, according to any of claims 9 to 13, **characterized in that** it comprises location means at a certain height of the first basin.

15. The device, according to claim 14, **characterized in that** the location means at a certain height of the first basin comprise floatation means.
